# FASCICULE DE BREVET EUROPEEN

(11) **EP 1 175 683 B1**
(45) Date de publication et mention de la délivrance du brevet: **19.01.2011**
(21) Numéro de dépôt: 00925347.7
(22) Date de dépôt: 27.04.2000
(51) Int. Cl.: H01B 7/00

(54) **ELEMENT DE GAINAGE DE CABLES COMPORTANT UN BLINDAGE ELECTROMAGNETIQUE, ET PROCEDE DE REALISATION**
KABELUMMANTELUNGSELEMENT MIT EINER ELEKTROMAGNETISCHEN ABSCHIRMUNG SOWIE ZUGEHÖRIGES HERSTELLUNGSVERFAHREN
CABLE SHEATHING ELEMENT COMPRISING ELECTROMAGNETIC SHIELDING AND METHOD FOR MAKING SAME

(30) Priorité: 05.05.1999 FR 9905706
(43) Date de publication de la demande: 30.01.2002
(73) Titulaire: Federal Mogul Systems Protection, 60800 Crépy-en-Valois (FR)
(72) Inventeur: FERRAND, Jean, F-60800 Crépy-en-Valois (FR); LOUART, Frédéric, F-60700 Pontpoint (FR); LAURENT, Benoît, F-60800 Crépy-en-Valois (FR)
(74) Mandataire: Santarelli
(86) Numéro de dépôt international: PCT/FR2000/001131
(87) Numéro de publication internationale: WO 2000/068958

(56) Documents cités:
- DE-A- 19 638 344
- US-A- 4 912 283

## Description

Le dispositif objet de la présente invention est du domaine des éléments de gainage de câbles, par exemple électriques, du type de ceux qui sont utilisés dans les industries aéronautiques ou automobiles. Plus particulièrement, la présente invention a trait à un dispositif de gainage de câbles fournissant un blindage électromagnétique à ces câbles.

Les faisceaux de câbles électriques, en particulier dans l'automobile et l'aéronautique, font l'objet de protection pour des raisons de sécurité évidentes. Cette protection peut être réalisée par gainage de tout ou partie du faisceau dans des gaines tubulaires de construction textile, thermoplastique ou autre. Dans le cas de certains faisceaux de câbles aéronautiques et militaires notamment, la protection mécanique peut être réalisée par un surtressage intégral du faisceau avec des fibres textiles méta-aramide d'appellation commerciale Nomex.

II est connu que des interférences électromagnétiques, telles que celles qui sont causées par les micro-ordinateurs portables, les téléphones portables et autres dispositifs électroniques autonomes, provoquent notamment des courants ou des tensions indésirables, et sont suspectées d'avoir causé des défaillances de circuits ou équipements électriques critiques d'avions dans le passé.

Dans le contexte actuel de recherche de protection des câbles électriques, notamment dans les aéronefs, contre ces interférences, il est devenu extrêmement souhaitable de "blinder" électromagnétiquement ces câbles.

Si le blindage des câbles dans les nouveaux aéronefs ou autres véhicules produits est réalisable dès la fabrication et l'installation des câbles, on comprend que l'intervention "a posteriori" sur des faisceaux de câbles existants est complexe et très coûteuse.

Par ailleurs, il reste clair que la réparation sur site de faisceaux de câbles endommagés oblige à prévoir un nouveau blindage après réparation;

On connaît alors des dispositifs de blindage de faisceaux de câbles par une bande métallisée éventuellement autocollante, enroulée sur elle-même autour des câbles.

Ce type d'agencement est long à installer et ne permet pas un accès facile aux câbles à protéger, en cas de suspicion de dommage local à un câble.

La présente invention entend donc remédier à ces inconvénients en proposant un dispositif de gainage permettant de gainer un faisceau de câbles en fournissant un blindage électromagnétique aux câbles gainés.

Selon un second objectif de l'invention, il est possible de gainer de faisceaux de fils déjà fixés en leurs extrémités, et donc éventuellement de procéder à des réparations sur les faisceaux, puis de gainer à nouveau ces faisceaux.

Le dispositif objet de la présente invention est donc un élément de gainage de câbles, réalisé sous la forme d'une feuille souple pré-formée, adaptée à s'enrouler sur elle-même sous l'effet d'un pré-formage en tube cylindrique à recouvrement, caractérisé en ce qu'il comporte une couche électriquement conductrice adaptée à fournir une continuité électrique circonférentielle sur au moins une partie de sa longueur et un repli adapté à se placer sous le recouvrement lors de l'enroulement de la feuille sur elle-même, et dont au moins une partie est électriquement conductrice.

On comprend que cette couche électriquement conductrice crée localement un effet de blindage contre les interférences électromagnétiques, et que si cette couche vient complètement entourer les câbles à protéger lors de l'enroulement de la feuille sur elle-même, un blindage complet desdits câbles est réalisé. La continuité électrique entre les deux bords de la gaine à recouvrement est ainsi assurée.

Selon un mode de réalisation préféré, basé sur l'utilisation de gaines d'un type déjà existant et qu'il suffit alors de modifier, l'élément de gainage comporte également un substrat en matière plastique thermoformé en bande auto-enroulable à recouvrement.

Selon un mode préféré de réalisation la couche électriquement conductrice est constituée d'un textile recouvert d'un matériau conducteur,

Cette disposition confère à l'épaisseur métallisée une certaine élasticité, favorable à son enroulement ou à sa déformation simultanément à l'élément de gainage.

Selon un mode plus particulier de réalisation, le matériau conducteur est constitué de cuivre.

Il est clair que cette disposition est favorable à une réalisation de l'élément de gainage avec des matériaux aisément disponibles et relativement bon marché.

L'invention vise également le procédé de fabrication d'élément de gainage de câbles, comportant un substrat et une couche conductrice, caractérisé en ce que ledit procédé comporte une étape de couture en ligne du substrat et de la couche conductrice à une ou plusieurs aiguilles en parallèle, ladite couche conductrice étant adaptée à recouvrir le substrat en totalité sur une face intérieure ainsi que sur un bord de la face extérieure dudit substrat.

Préférentiellement, le procédé comporte également une étape de collage d'un bord de la couche conductrice sur la face extérieure du substrat.

La description et les dessins qui suivent permettront de mieux comprendre les buts et avantages de l'invention. Il est clair que cette description est donnée à titre d'exemple, et n'a pas de caractère limitatif. Dans les dessins :
- la figure 1 représente un dispositif de gainage de câbles, partiellement déplié;
- la figure 2 montre une gaine enroulée cylindrique et ses constituants; et
- la figure 3 est une vue en coupe transversale de la gaine.

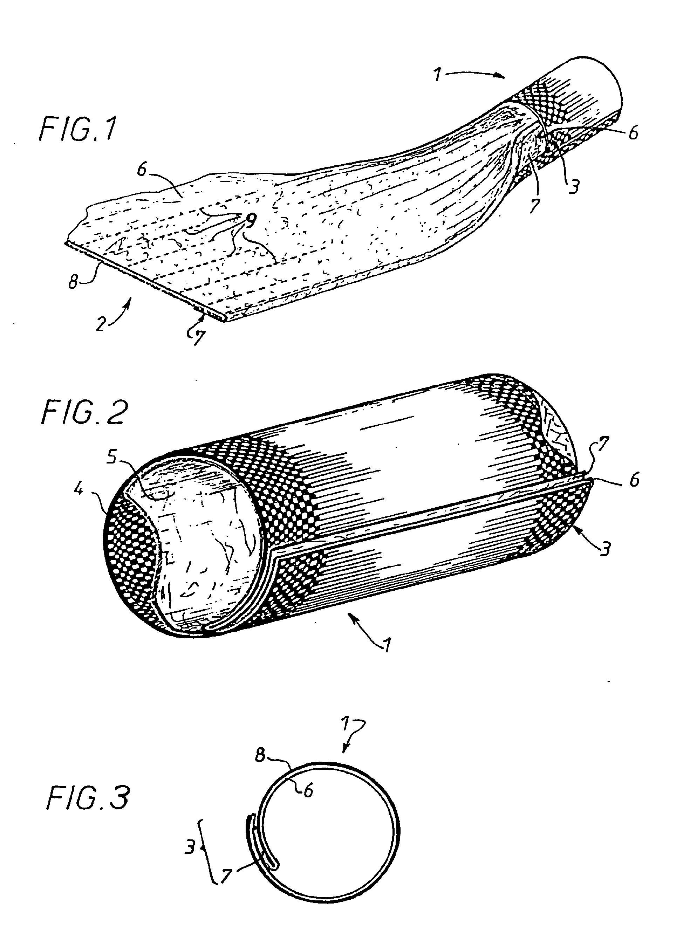

Comme on le voit sur la figure 1, l'élément de gainage 1 est composé d'une feuille 2 enroulable sur elle-même selon une de ses génératrices, sous l'effet d'un pré-formage de telle sorte que l'enroulement présente un recouvrement 3 qui garantit un gainage complet des câbles, tout en offrant une certaine latitude sur le volume du faisceau de câbles gainés.

La feuille 2 comporte, dans l'exemple décrit ici à titre non limitatif, un substrat 4 en matière plastique, réalisé de façon connue en matériau textile: tissée, tressée, tricotée, non-tissée ou tout autre procédé textile.

Ce substrat 4, qui peut par exemple être constitué par une gaine connue sous le nom commercial "TwistTube", commercialisé sous la marque Bentley-Harris par la société Federal Mogul, ne constitue pas l'objet de l'invention, et ne sera pas décrit plus avant ici. On peut consulter par exemple à ce sujet la demande de brevet français N° 98108354 (élément de gainage pour dérivation de câbles), de la même société.

La feuille 2 comporte par ailleurs une couche conductrice 5 constituée de matériau textile souple et électriquement conducteur, tel que par exemple le matériau connu sous le nom commercial de "Flectron" commercialisé par la société américaine APM.

Ce matériau comporte un composant structurel textile, tel que tissu ou non tissé polyester, recouvert d'une couche de cuivre conductrice.

Comme on le voit sur les figures, la couche conductrice 5 vient recouvrir le substrat 4 en totalité sur sa face "intérieure" 6 (face destinée à devenir la face intérieure lors de l'enroulement de la feuille 2), ainsi que sur un bord 7 de sa face extérieure 8. De la sorte, lorsque la feuille 2 est enroulée sur elle-même, ledit bord 7 vient se placer sous le recouvrement 3. On assure de cette manière une continuité électrique entre les deux bords de l'élément de gainage.

Des coutures 9 assurent la tenue mécanique entre le substrat 4 et la couche conductrice 5.

En ce qui concerne son procédé de réalisation, dans un mode de réalisation préféré décrit ici à titre d'exemple non limitatif, la première étape, partant d'un substrat 4 sous forme de bande textile sensiblement rectangulaire, est celle de mise en forme en tube présentant une étendue circonférentielle supérieure à 360°, de manière à former un recouvrement 5.

La bande formant substrat 4 est réalisée de façon connue en matériau textile : tissée, tressée, tricotée, non-tissée ou tout autre procédé textile.

La couche conductrice 5 est ensuite laminée sur le substrat 4.

L'assemblage du substrat 4 et de la couche conductrice 5 est réalisé en ligne et en continu, par un procédé de couture à plusieurs aiguilles en parallèle, produisant ainsi des lignes de couture parallèles aux bords de la feuille enroulable.

Dans l'exemple décrit ici, une à deux lignes sont réalisées de façon préférentielle. Il est clair que ce nombre peut être plus important, notamment pour les plus gros diamètres, plusieurs gammes de feuilles de diamètres différents, adaptées à gainer des faisceaux de câbles plus ou moins importants, étant réalisables.

La partie de la couche conductrice 5 qui vient se placer sur la face extérieure 8 du substrat 4 est fixée audit substrat soit directement lors de la couture, soit plus simplement par collage par un matériau connu de l'homme du métier.

Le formage de la bande textile en tube avec recouvrement est réalisé d'une façon classique, et par exemple à chaud par thermoformage. Tout autre procédé classique est utilisable.

En ce qui concerne le mode d'utilisation, on comprend que par l'effet du préformage du substrat 4, qui tend à le ramener sous forme tubulaire, la feuille 2 (comportant le substrat 4 et la couche conductrice 5) va avoir tendance à s'enrouler spontanément sur elle-même, formant ainsi une gaine blindée à recouvrement et contact électrique entre les deux bords. La mise en oeuvre du dispositif est donc très simple.

Dans un premier mode d'utilisation, la gaine à dérivation est positionnée en place par l'utilisateur, et les faisceaux de câbles sont intégrés a posteriori dans la gaine.

Dans un autre mode d'utilisation, la gaine est insérée sur des faisceaux de câbles pré-existants, et amenée autour de ces câbles.

Il est évident que par ce moyen de gainage il est possible de procéder au gainage de faisceaux de câbles déjà installés sur avion ou dans leur environnement d'utilisation, ou encore de gainer à nouveau des faisceaux de câbles ayant nécessité des réparations.

Dans une variante non représentée, la couche conductrice 5 est disposée sur les deux faces 6, 8 du substrat 4.

Il est à noter qu'il est loisible d'utiliser également comme substrat 4 un matériau non textile, tel que thermoplastique extrudé présenté en film. Ce matériau est alors éventuellement directement extrudable en forme tubulaire, de manière à lui conférer une rigidité propre et une étendue circonférentielle supérieure à 360°, formant un recouvrement 2

## Revendications

1. Elément de gainage de câbles, réalisé sous la forme d'une feuille (2) souple pré-formée, adaptée à s'enrouler sur elle-même sous l'effet du préformage en tube cylindrique à recouvrement, **caractérisé en ce qu'**il comporte une couche (5) électriquement conductrice adaptée à fournir une continuité électrique circonférentielle sur au moins une partie de sa longueur et un repli adapté à se placer sous le recouvrement lors de l'enroulement de la feuille sur elle-même, et dont au moins une partie (7) est électriquement conductrice.

2. Elément selon la revendication 1, **caractérisé en ce qu'**il comporte également un substrat (4) en matière plastique thermoformé en bande auto-enroulable à recouvrement.

3. Elément de gainage selon la revendication 2, **caractérisé en ce que** la couche conductrice (5) recouvre en totalité une face intérieure (6) du substrat (4) et un bord (7) d'une face extérieure (8) dudit substrat.

4. Elément de gainage selon l'une quelconque des revendications 1 à 3, **caractérisé en ce que** la couche (5) électriquement conductrice est constituée d'un textile recouvert d'un matériau conducteur,

5. Elément de gainage selon la revendication 4, **caractérisé en ce que** le matériau conducteur est constitué de cuivre.

6. Procédé de fabrication d'élément de gainage de câbles, comportant un substrat (4) et une couche conductrice (5), **caractérisé en ce que** ledit procédé comporte une étape de couture en ligne du substrat (4) et de la couche conductrice (5) à une aiguille ou plusieurs aiguilles en parallèle, ladite couche conductrice étant adaptée à recouvrir le substrat (4) en totalité sur une face intérieure (6) ainsi que sur un bord (7) de la face extérieure (8) dudit substrat (4).

7. Procédé selon la revendication 6, **caractérisé en ce qu'**il comporte également une étape de collage d'un bord (7) de la couche conductrice (5) sur la face extérieure (8) du substrat (4).

## Claims

1. A cable sheathing element, produced in the form of a preformed flexible sheet (2), adapted to be wound up on itself due to the effect of its preforming into the form of a cylindrical sheathing tube, **characterised in that** it comprises an electrically conductive layer (5) adapted to provide circumferential electrical continuity over at least part of its length, and a back fold adapted to locate under the overlap when the sheet is wound up on itself and at least one portion (7) of which is electrically conductive.

2. An element according to claim 1, **characterised in that** it further includes a thermoformed plastics material substrate (4) in the form of a self-winding strip with an overlap.

3. A sheathing element according to claim 2, **characterised in that** the conductive layer (5) covers the whole of an inside face (6) of the substrate (4) and one edge (7) of an outside face (8) of said substrate.

4. A sheathing element according to any of claims 1 to 3, **characterised in that** the electrically conductive layer (5) consists of a textile covered with a conductive material.

5. A sheathing element according to claim 4, **characterised in that** the conductive material is copper.

6. A method of manufacturing a cable sheathing element including a substrate (4) and a conductive layer (5), **characterised in that** said method includes a step of in-line sewing of the substrate (4) and the conductive layer (5) using one needle or a plurality of needles in parallel, said conductive layer being adapted to cover the whole of an inside face (6) of the substrate (4) as well as one edge (7) of an outside face (8) of said substrate (4).

7. A method according to claim 6, **characterised in that** it further includes a step of gluing an edge (7) of the conductive layer (5) to the outside face (8) of the substrate (4).

## Patentansprüche

1. Kabelummantelungselement, das in Form eines biegsamen, vorgeformten Flächenkörpers (2) hergestellt ist, der dazu ausgelegt ist, sich unter der Wirkung der Vorformung als zylindrisches Abdeckrohr um sich selbst aufzurollen, **dadurch gekennzeichnet, dass** es eine elektrisch leitende Schicht (5), die dazu ausgelegt ist, auf zumindest einem Teil ihrer Länge eine umfängliche elektrische Kontinuität bereitzustellen, und eine Umfaltung umfasst, die dazu ausgelegt ist, sich beim Einrollen des Flächenkörpers um sich selbst unter die Abdeckung zu legen, und von der zumindest ein Teil (7) elektrisch leitend ist.

2. Element nach Anspruch 1, **dadurch gekennzeichnet, dass** es auch eine Unterlage (4) aus Kunststoff umfasst, die als selbstaufrollendes Abdeckband wärmegeformt ist.

3. Ummantelungselement nach Anspruch 2, **dadurch gekennzeichnet, dass** die leitende Schicht (5) eine Innenseite (6) der Unterlage (4) und einen Rand (7) einer Außenseite (8) der Unterlage zur Gänze abdeckt.

4. Ummantelungselement nach einem der Ansprüche 1 bis 3, **dadurch gekennzeichnet, dass** die elektrisch leitende Schicht (5) aus einer mit einem leitenden Material bedeckten Textilie besteht.

5. Ummantelungselement nach Anspruch 4, **dadurch gekennzeichnet, dass** das leitende Material aus Kupfer besteht.

6. Verfahren zur Herstellung eines Kabelummantelungselements, das eine Unterlage (4) und eine leitende Schicht (5) umfasst, **dadurch gekennzeichnet, dass** das Verfahren einen Schritt des geraden Vernähens der Unterlage (4) und der leitenden Schicht (5) mit einer Nadel oder mehreren parallelen Nadeln umfasst, wobei die leitende Schicht dazu ausgelegt ist, die Unterlage (4) auf einer Unterseite (6) sowie einem Rand (7) der Außenseite (8) der Unterlage (4) zur Gänze zu bedecken.

7. Verfahren nach Anspruch 6, **dadurch gekennzeichnet, dass** es auch einen Schritt des Anklebens eines Rands (7) der leitenden Schicht (5) an der Außenseite (8) der Unterlage (4) umfasst.
